# FASCICULE DE BREVET EUROPEEN

(11) **EP 0 683 870 B1**
(45) Date de publication et mention de la délivrance du brevet: **27.12.1996**
(21) Numéro de dépôt: 94904691.6
(22) Date de dépôt: 19.01.1994
(51) Int. Cl.: F16D 65/16

(54) **DISPOSITIF A PLATEAUX A BILLES ET A CAGE DE CENTRAGE**
EINRICHTUNG MIT KUGELBÖDEN UND ZENTRIERKÄFIG
BALL PLATE DEVICE WITH CENTRING CAGE

(30) Priorité: 16.02.1993 FR 9301706
(43) Date de publication de la demande: 29.11.1995
(73) Titulaire: ALLIEDSIGNAL EUROPE SERVICES TECHNIQUES, 93700 Drancy (FR)
(72) Inventeur: MERY, Jean, Claude, F-93320 Pavillons-sous-Bois (FR)
(74) Mandataire: Bentz, Jean-Paul
(86) Numéro de dépôt international: FR9400062
(87) Numéro de publication internationale: WO9419617

(56) Documents cités:
- FR-A- 2 638 214
- GB-A- 2 092 248

## Description

La présente invention concerne un dispositif de serrage comprenant : deux plateaux présentant des faces en vis-à-vis sensiblement parallèles l'une à l'autre, l'un au moins de ces plateaux étant susceptible d'être entraîné dans un mouvement de rotation autour d'un axe perpendiculaire à ces faces; une pluralité de cavités de guidage creusées dans l'un au moins de ces plateaux à distance de l'axe; une pluralité de billes correspondantes engagées dans les cavités et enserrées entre les deux plateaux; et un disque de maintien interposé entre les plateaux et percé de logements circulaires dans lesquels les billes sont maintenues dans des positions angulaires relatives fixes, ce disque présentant, sur l'une de ses faces au moins, un pion central engagé dans un alésage axial correspondant pratiqué dans le plateau disposé en regard de cette face.

Des dispositifs de ce type sont bien connus dans l'art antérieur et par exemple utilisés, comme le montre le brevet US 5 038 895, pour la commande de serrage de frein à main dans les véhicules automobiles.

Un problème classiquement rencontré dans la fabrication de ces dispositifs, qui comprennent de nombreuses pièces, est que leur montage suppose une mise en place très délicate de chacune de ces pièces dans des conditions d'accessibilité très mauvaises.

La présente invention se situe dans ce contexte et se propose d'améliorer de façon sensible la fabrication de ces dispositifs.

A cette fin, le dispositif de l'invention est essentiellement caractérisé en ce que le disque de maintien comporte, sur chacune de ses faces, des moyens élastiques propres à assurer une solidarisation axiale de ce disque de maintien avec le plateau disposé en regard de cette face.

Par exemple, il est possible de prévoir que le disque de maintien présente sur chacune de ses faces un pion central, que les plateaux présentent, en regard de ces pions, des alésages axiaux respectifs, et que chacun de ces pions soit engagé à force dans l'un de ces alésages, cette disposition permettant le montage, dans d'excellentes conditions d'accessibilité, du sous-ensemble constitué par les plateaux, les billes et le disque, ce sous-ensemble pouvant ensuite être inséré en une seule opération dans l'ensemble destiné à le recevoir.

En outre et selon un mode de réalisation préféré de l'invention, l'un au moins des pions prend la forme d'une pince élastique expansible.

D'autres caractéristiques et avantages de l'invention ressortiront clairement de la description qui en est faite ci-après, à titre indicatif et nullement limitatif, en référence aux dessins annexés, dans lesquels :
- La Figure 1 est une vue en coupe d'un frein à disque utilisant un dispositif de serrage à plateau tournant conforme à l'invention ;
- La Figure 2 est une vue en coupe partielle éclatée d'un tel dispositif de serrage à plateau tournant ;
- La Figure 3 est une vue en coupe semblable à la Figure 2, mais représente le dispositif de serrage à plateau tournant après montage ;
- La Figure 4 est une vue de dessus du disque de maintien ;
- La Figure 5 est une vue de côté du disque de maintien ; et
- La Figure 6 est une vue en coupe agrandie des pions de centrage du disque de maintien.

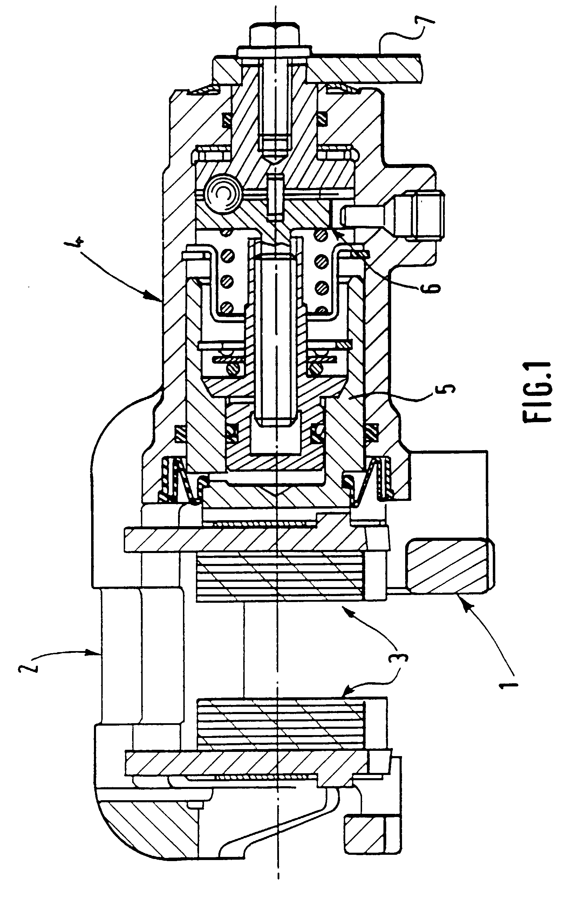

La figure 1 représente un frein à disque de type connu, comprenant une chape 1, un étrier coulissant 2, doté d'organes de friction 3, et un moteur de frein 4.

Le moteur de frein comporte lui-même un piston 5 susceptible d'être actionné soit hydrauliquement, soit mécaniquement par l'intermédiaire d'un dispositif de serrage à plateaux 6 mû par un levier 7.

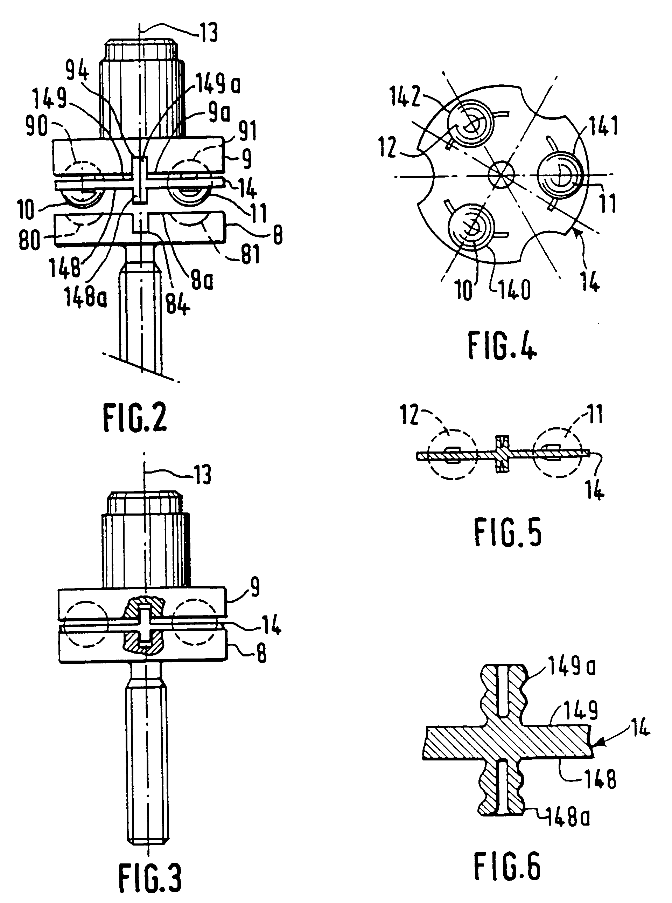

Un tel dispositif de serrage, mieux visible sur les figures 2 et 3, comporte des premier et second plateaux 8 et 9, sensiblement parallèles l'un à l'autre et enserrant, entre leurs faces antérieures en vis-à-vis 8a et 9a, des billes telles que 10, 11, et 12.

Ces plateaux peuvent subir une rotation relative par entraînement en rotation de l'un d'eux au moins autour d'un axe 13 perpendiculaire aux faces 8a et 9a de ces plateaux.

Les billes 10, 11, et 12 sont logées dans des cavités de guidage identiques telles que 80, 81, 90, et 91 creusées dans l'un des plateaux au moins, et se trouvent donc enserrées entre ces derniers.

Cependant, ces billes sont par ailleurs engagées dans les logements circulaires respectifs 140, 141, et 142 d'un disque de maintien 14 interposé entre les plateaux et grâce auquel ces billes sont maintenues dans des positions angulaires relatives fixes.

Le disque de maintien 14 présente sur chacune de ses faces 148, 149, un pion central tel que 148a et 149a disposé sur l'axe de rotation 13, les deux pions se trouvant engagés à force dans des alésages axiaux 84 et 94 respectivement creusés dans les plateaux 8 et 9 en regard de ces pions.

De préférence (figure 6), les pions prennent chacun la forme d'une pince élastique expansible offrant, aux pions insérés dans les alésages axiaux, une certaine résistance à l'arrachement et permettant, comme le montre la figure 3, d'assembler le dispositif de serrage sous la forme d'un seul module mécanique facile à assembler et à monter.

Selon un autre mode de réalisation possible, un pion de l'une des faces au moins du disque de maintien 14, par exemple le pion 148a de la face 148, peut être remplacé par des pattes régulièrement espacées à la périphérie de ce disque 14, par exemple au nombre de trois, et dont chacune est susceptible de s'écarter élastiquement vers l'extérieur de la périphérie de ce disque 14 pour venir chercher un appui sur la face postérieure du plateau 8 qui est disposé en regard de cette face 148.

## Revendications

1. Dispositif de serrage comprenant : deux plateaux (8, 9) présentant des faces en vis-à-vis (8a, 9a) sensiblement parallèles l'une à l'autre, l'un au moins de ces plateaux (8, 9) étant susceptible d'être entraîné dans un mouvement de rotation autour d'un axe (13) perpendiculaire à ces faces; une pluralité de cavités de guidage (80, 81, 90, 91) creusées dans l'un au moins de ces plateaux à distance de l'axe ; une pluralité de billes correspondantes (10, 11, 12) engagées dans les cavités et enserrées entre les deux plateaux; et un disque de maintien (14) interposé entre les plateaux et percé de logements circulaires (140, 141, 142) dans lesquels les billes sont maintenues dans des positions angulaires relatives fixes, ce disque présentant, sur l'une de ses faces (148, 149) au moins, un pion central (148a) engagé dans un alésage axial correspondant (8a) pratiqué dans le plateau (8) disposé en regard de cette face, caractérisé en ce que ce disque de maintien comporte, sur chacune de ses faces, des moyens élastiques propres à assurer une solidarisation axiale de ce disque de maintien avec le plateau disposé en regard de cette face.

2. Dispositif de serrage suivant la revendication 1, caractérisé en ce que le disque de maintien présente sur chacune de ses faces (148, 149) un pion central (148a, 149a), en ce que les plateaux présentent, en regard de ces pions (148a, 149a), des alésages axiaux respectifs (84, 94), et en ce que chacun de ces pions (148a, 149a) est engagé à force dans l'un de ces alésages (84, 94).

3. Dispositif de serrage suivant la revendication 2, caractérisé en ce que l'un au moins des pions (148a, 149a) prend la forme d'une pince élastique expansible.

## Patentansprüche

1. Spannvorrichtung mit zwei Platten (8,9), die einander gegenüberliegende Flächen (8a, 9a) aufweisen, die zueinander im wesentlichen parallel sind, wobei wenigstens eine dieser Platten (8, 9) um eine zu diesen Flächen senkrechte Achse (13) gedreht werden kann, sowie mehreren in wenigstens einer dieser Platten in einem Abstand von der Achse ausgebildeten Führungsvertiefungen (80, 81, 90, 91), mehreren entsprechenden Kugeln (10, 11, 12), die in die Vertiefungen eingreifen und zwischen den beiden Platten eingespannt sind, und einer Haltescheibe (14), die zwischen den Platten angeordnet und von kreisförmigen Aufnahmen (140, 141, 142) durchbrochen ist, in denen die Kugeln in festen relativen Winkelstellungen gehalten sind, wobei diese Scheibe auf wenigstens einer ihrer Flächen (148, 149) einen Mittelstift (148a) aufweist, der in eine entsprechende axiale Bohrung (8a) eingreift, die in der gegenüber dieser Fläche angeordneten Platte (8) gebildet ist, dadurch gekennzeichnet, daß diese Haltescheibe auf jeder ihrer Flächen elastische Mittel aufweist, die eine axiale Befestigung dieser Haltescheibe an der gegenüber dieser Fläche angeordneten Platte gewährleisten können.

2. Spannvorrichtung nach Anspruch 1, dadurch gekennzeichnet, daß die Haltescheibe auf jeder ihrer Flächen (148, 149) einen Mittelstift (148a, 149a) aufweist, daß die Platten gegenüber diesen Stiften (148a, 149a) entsprechende axiale Bohrungen (84, 94) aufweisen und daß jeder dieser Stifte (148a, 149a) mit Kraft in eine dieser Bohrungen (84, 94) eingebracht ist.

3. Spannvorrichtung nach Anspruch 2, dadurch gekennzeichnet, daß wenigstens einer der Stifte (148a, 149a) die Form einer elastischen aufweitbaren Klemme hat.

## Claims

1. Brake-application device comprising: two plates (8, 9) having opposite faces (8a, 9a) which are substantially parallel to each other, at least one of these plates (8, 9) being capable of being driven in a rotational movement about an axis (13) perpendicular to these faces; a plurality of guide cavities (80, 81, 90, 91) formed in at least one of these plates at a distance from the axis; a plurality of corresponding balls (10, 11, 12) engaged in the cavities and gripped between the two plates; and a support disk (14) placed in between the plates and pierced with circular housings (140, 141, 142) in which the balls are held in fixed relative angular positions, this disk having, on at least one of its faces (148, 149), a central protuberance (148a) engaged in a corresponding axial bore (8a) made in the plate (8) arranged opposite this face, characterized in that this support disk includes, on each of its faces, elastic means capable of ensuring axial securing of this support disk to the plate arranged opposite this face.

2. Brake-application device according to claim 1, characterized in that the support disk has a central protuberance (148a, 149a) on each of its faces (148, 149), in that the plates have respective axial bores (84, 94) opposite these protuberances (148a, 149a), and in that each of these protuberances (148a, 149a) is engaged by force in one of these bores (84, 94).

3. Brake-application device according to claim 2, characterized in that at least one of the protuberances (148a, 149a) takes the form of an expandable elastic clip.
